# EUROPEAN PATENT SPECIFICATION

(11) **EP 0 785 878 B1**
(45) Date of publication and mention of the grant of the patent: **29.07.1998**
(21) Application number: 95933548.0
(22) Date of filing: 13.10.1995
(51) Int. Cl.: B60N 2/16

(54) **HEIGHT ADJUSTMENT DEVICE FOR VEHICLE SEATS**
HÖHENVERSTELLVORRICHTUNG FÜR FAHRZEUGSITZE
DISPOSITIF DE REGLAGE EN HAUTEUR POUR SIEGES DE VEHICULES

(30) Priority: 14.10.1994 GB 9420734; 24.11.1994 GB 9423762
(43) Date of publication of application: 30.07.1997
(73) Proprietor: Dunlop Cox Ltd, Nottingham NG8 4GP (GB)
(72) Inventor: CHRISTOPHER, Hugh, Charles, Nottingham NG2 6JR (GB); DAVIES, Michael, John, Newark Notts NG23 6JN (GB)
(74) Representative: Archer, Philip Bruce
(86) International application number: GB9502423
(87) International publication number: WO9611819

(56) References cited:
- EP-A- 0 116 965
- EP-A- 0 325 352
- FR-A- 2 077 168
- FR-A- 2 379 267
- GB-A- 1 298 534
- GB-A- 2 001 730
- US-A- 4 441 758

## Description

This invention relates to an adjustment device, particularly, but not exclusively, for the adjustment of the height of a vehicle seat.

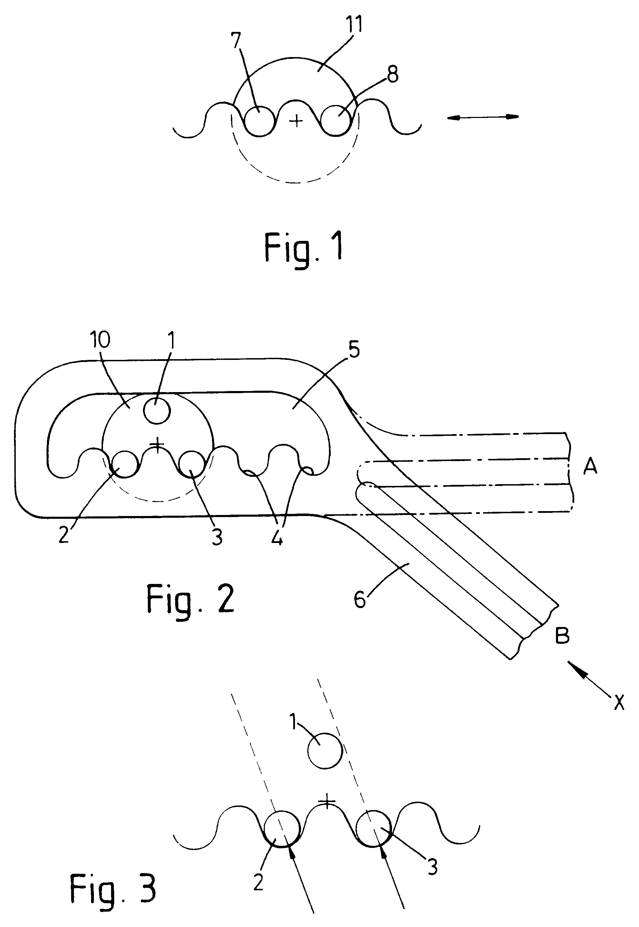

A known device, illustrated in Figure 1 of the accompanying drawings, comprises a rotatable member having two projections, specifically two pegs extending perpendicularly from the face of a disc and positioned diametrically on opposite sides of the centre of the rotation of the disc. The two pegs engage in a row of notches and rotation of the member through 180° causes linear movement of an element in which the notches are provided through a distance equal to the spacing of the pegs. However, since in the case of a seat height adjuster, the rotatable member is fixed to the seat and rotated by a hand operated knob, it has been found awkward to rotate the knob through 180° in a single movement of the hand.

It is an object of the present invention to provide an adjustment device which does not suffer from, or suffers less from the above disadvantage.

In accordance with the invention an adjustment device comprises a series of regularly spaced apart notches formed in an arm, a rotatable member comprising at least three projections, equally spaced apart circumferentially of the member, two adjacent projections engaging in adjacent notches arranged in a straight line whereby rotation of the member through an angle equal to the angular disposition of two adjacent projections causes the arm to move through a distance as defined by the distance between two adjacent projections from one stable position to another, the direction of the reaction force along the arm relative to the centre of rotation of the member causing the projections to remain in the required notches until the member is rotated, the arm extending at an angle of about 30° or of about 45° to the line of the notches.

Preferably biasing means such as a spring is provided to create a force to keep the projections in their notches. The arm may be a link or crank of a seat height adjustment mechanism, or for the position adjustment e.g. height of a component with respect to its surroundings.

In accordance with a more limited aspect of the present invention a seat height adjustment device comprises two arms, one linked to the front of the seat and the other to the rear of the seat, each arm having a series of regularly spaced apart notches formed therein, two rotatable members comprising at least three projections equally spaced apart circumferentially of the member, selection means for enabling two adjacent projections of one of the two members to be engageable with one arm or two adjacent projections of the other of the two members to be engageable with the other of the two arms, the said adjacent projections engaging in adjacent notches in the selected arm whereby rotation of the member through an angle equal to the angular disposition of the two adjacent projections causes the selected arm to move through a distance as defined by the distance between the two adjacent projections from one stable position to another and raising or lowering the front or rear of the seat, depending on which of the two arms is selected, the direction of the reaction force along the selected arm relative to the centre of rotation of the member causing the projections to remain in the required notches until the member is rotated.

The rotatable members may be attached to a rotatable handle secured to the seat frame, the handle being rotated to raise or lower the front or rear of the seat. The handle may be used as the selection means. The members and handle may be moved axially on a shaft on which the members are mounted, the shaft being formed with formations such as spines, which engage and thereby select one or other of the two members.

Three embodiments of the invention will now be described by way of example only with reference to the accompanying drawings of which:
Figure 1 shows diagrammatically part of a known device comprising a rotatable member with two pegs which engage into adjacent notches of an arm;
Figure 2 shows a side view of part of a device according to a first embodiment of the present invention comprising a rotatable gear member with three pegs, two of which engage in adjacent notches formed in an elongated aperture in an arm;
Figure 3 shows on a larger scale than Figure 2 some of the notches and the pegs of the device illustrated in Figure 2 and a line of action of the reaction force applied by the arm;
Figure 4 shows a plan view of a vehicle seat slide having a seat height adjustment device according to a second embodiment of the invention;
Figure 5 shows a side view, of the seat slide shown in Figure 4;
Figure 6 shows an enlarged part of Figure 4 showing the seat height adjustment device in the lowest and highest positions of the seat;
Figure 7 shows diagrammatically part of a seat height adjustment device according to a third embodiment of the invention, particularly a rotatable adjustment handle and two arms, one linked to the front of a vehicle seat and the other linked to the rear of the seat;
Figure 8 shows detail of an alternate form of the rear arm shown in Figure 7 linked to the rear of the seat;
Figure 9 shows a fragmentary cross-sectional view of the two arms and rotatable members shown in Figure 7 in a housing; and
Figure 10 shows a cross-section through an alternative form of handle and rotatable shaft.

The seat height adjustment device according to the first embodiment and part of which is shown in Figures 2 and 3 of the accompanying drawings, comprises a rotatable disc-shaped gear member 10 having three equally spaced apart pegs 1, 2 and 3, the rotatable member being mounted for example on the side of the base of a seat and rotatable by means of a knob (not shown) mounted concentrically with the member. As shown in the drawings, two adjacent pegs 2, 3 of the gear member 10 engage in adjacent notches 4 of a row of notches formed in an aperture 5 stamped in a cranked arm 6 of the adjustment device. A spring (not shown) is provided to bias the arm 6 of the adjustment device against the pegs 2, 3 of the rotatable gear member 10.

In use as the rotatable gear member 10 is rotated through 120°, for example in a clockwise direction as shown in Figure 3, peg 1 will move into the empty notch adjacent peg 3 and peg 2 will move out of its notch to take up a position similar to that occupied by peg 1. The arm will move a linear distance equal to the spacing between the centres of the two adjacent pegs. Compared with the prior art device comprising a gear member 11 and two pegs 7, 8 illustrated in Figure 1 the rotatable member has only to be rotated through 120° rather than 180° as previously and if four or more pegs are provided, then the angular movement required is correspondingly less, being 90° in the case of four pegs and 72° in the case of five pegs etc. If the arm 6 is in the position shown in dotted outline at A in Fig. 2, the rotatable gear member 10 will move under the action of a high reaction load applied through the arm and therefore the arm will tend to move away from the required position, rotating the gear member as it moves. This is undesirable because in the case of a seat height adjustment mechanism such a load may be applied by a person occupying the seat.

However by having the arm generally as shown in Figure 2 at position B, at about 30° or 45° to the line of notches, the line of action X of the reaction force is changed to be generally as that illustrated in Figure 3 and the arm will remain in position until caused to move by rotation of the gear member 10. The reason for this is if one imagines unwanted clockwise rotation of the gear member 10, this will cause peg 2 to move away from the surface at the base of the notch and the line of action will act solely against peg 3, causing it to rotate in an anti-clockwise direction. The unwanted clockwise rotation will therefore be countered by the reaction force. If alternatively unwanted anti-clockwise rotation of the rotatable gear member occurs, peg 3 will move away from its notch and the reaction force will be applied to peg 2. This will cause clockwise rotation of the member around its centre of rotation so as to move peg 3 back into position. Again the unwanted rotation is countered.

The arm of the first embodiment may be manufactured by a stamping or pressing operation from sheet mild steel and in practice may comprise the link of a seat height adjustment device.

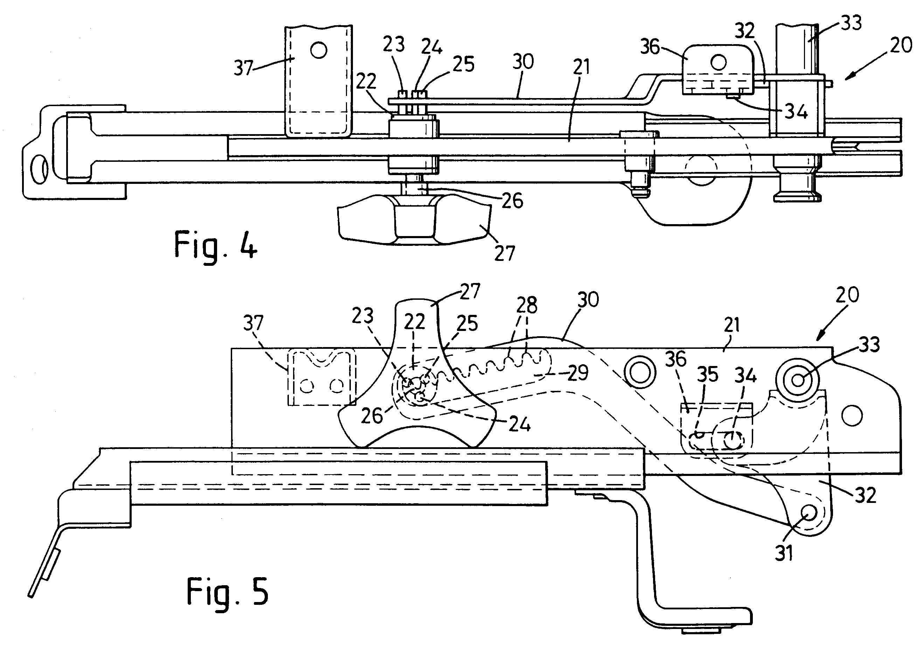

The second embodiment of the invention is shown in Figures 4, 5 and 6 and generally shows the device of the first embodiment as a seat height adjustment device attached to the upper, moveable member 21 of a seat slide 20. The device comprises a rotatable disc-shaped gear member 22 having three equally spaced apart pegs 23, 24 and 25. The rotatable member 22 is mounted inboard of the upper member of the seat slide 20 on a shaft 26. At the other end of the shaft, and outboard of the upper member 21, is a knob 27. As shown particularly in Figure 5 two adjacent pegs 23 and 25 engage in adjacent notches 28 in a row of notches formed in an aperture 29 stamped in a cranked arm 30. As will be realised, the weight of the seat and occupant biases the pegs into the notches. A biasing spring is thereby rendered unnecessary.

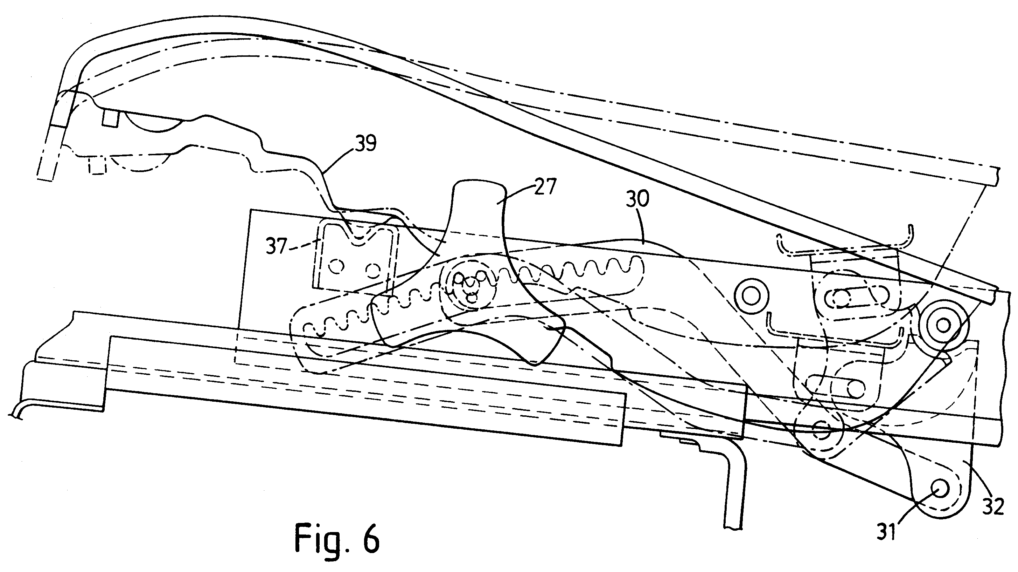

The cranked arm 30 extends towards the rear of the slide 20 and is pivotally attached at 31 to a rear crank 32 which is itself attached to a rotatable rear bracing tube 33 of the seat frame. The crank 32 also has a pin 34 which engages in a slot 35 in a seat pan carrying bracket 36. The seat pan 39 (see Figure 6) is also supported on a member 21 by means of a further bracket 37 towards the front of the slide.

In use the operation of the device is similar to that described in relation to the first embodiment. As the knob 27 is rotated the pegs 23, 24 and 25 move along the line of notches 28 and the arm 30 is moved forwards. This causes the crank 32 to rotate thus causing the bracing tube 33 to rotate and the bracket 36 to be raised, the pin 34 sliding in the slot 35 (a similar crank and bracket on the other seat slide are also forced to move because of rotation of the bracing tube). The front bracket 37 is fixed so the device raises the rear of the seat. Thus the seat is caused to tilt forwardly, pivoting on the front bracket.

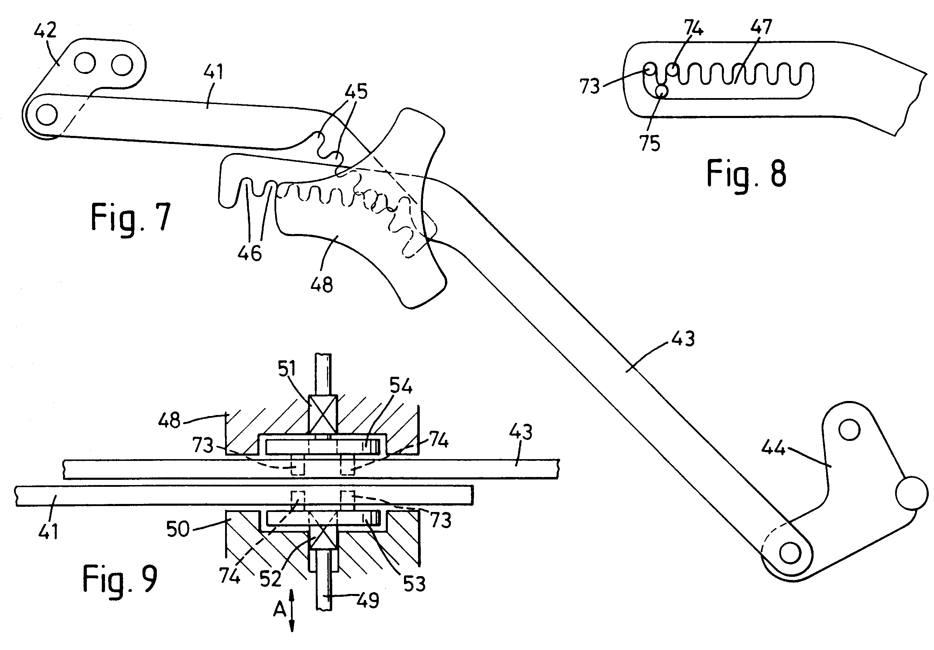

As shown in Figure 7 the adjustment device of the third embodiment of the present invention comprises two arms one 41 being linked via a pivotal crank 42 to the front of the vehicle seat and the other arm 43 being linked via another pivotal crank 44 to the rear of the seat. The arms 41, 43 are formed e.g. by a stamping operation from mild steel sheet. The rear of the front arm 41 is formed with a first series of notches 45 and the front of the rear arm 43 is formed with a further series of notches 46. Both series are on the lower edges of the respective arms. The line of each series of notches extends at about 30° or 40° to the general line of the arm. Alternatively the notches may be formed in an elongated aperture 47 as shown in Figure 8.

An adjustment handle 48 is provided on a rotatable shaft 49 (see Figure 9) and positioned on the seat frame (not shown). The handle 48 is positioned on the outboard side of the seat. The shaft 49 extends inwardly through a housing 50 positioned beneath the seat frame. Two sets of drive dogs 51, 52 e.g. formations such as splines in a region of the shaft 49, are provided and by pulling or pushing on the handle 48 the shaft may be moved axially in the direction of the arrow A. At one end of the travel of the handle 48 and associated shaft 49 the dogs engage one of two rotatable members 53, 54 and at the other end of the travel the dogs engage the other of the two rotatable members 53, 54. Thus the handle 48 acts as a selection means.

The rotatable members 53, 54 each have three equally spaced apart pegs 73, 74, 75, one set of pegs facing one direction and the other facing in the opposite direction as shown in Figure 9. Depending on the position of the shaft 49, one member 53 may be rotated by the shaft 49 through the engagement of the dogs 52 and move the front arm 41 with the other member 54 being disengaged i.e. freely rotatable on the shaft 49. Alternatively the other member 54 engages the other dogs 51 on the shaft 49 and thus is able to move the rear arm 43 with the one member 53 being freely rotatable. Depending on the direction of rotation of the shaft 49 by means of the handle 48 and depending on which arm is engaged, the front or rear of the seat may be raised or lowered as required by the seat occupant. As shown in Figure 8, two adjacent pegs 73, 74 of both members engage in the adjacent notches in the associated arm, i.e. the front or rear arm. One or more springs (not shown) are provided to bias the arms against the pegs. Thus depending on the position of the handle 48, the front arm 41 or the rear arm 43 is driveably engaged and depending on the direction of rotation of the handle 48, either the front or the rear of the seat may be raised or lowered as required by the seat occupant.

As the rotatable member 53 or 54 which has been selected to engage the appropriate arm 41 or 43 is rotated by the handle 48 through 120° , for example in an anti-clockwise direction as shown in Figure 8, peg 75 will move into an empty notch adjacent peg 74 and peg 73 will move out of its notch to take up a position similar to that occupied by peg 75. The arm will move a linear distance equal to the spacing between the centres of the two adjacent pegs. In other words the arm moves a distance equal to the spacing between two adjacent pegs by rotation through 120°. If however four pegs are provided, then the angular movement required will be 90° and in the case of five pegs the angular movement required will be 72° as described above in relation to the first embodiment.

Two pairs of arms may be provided, one pair being located on one side of the seat and the other pair on the opposite side of the seat. The pairs of arms extend generally in the fore and aft direction of the seat. The shaft 49 may extend across the whole of the underside of the seat base so that in one position of the seat handle the rear arms of both pairs are engaged by the formations eg the dogs/splines on the shaft 49 and in the other position of the handle the front arms of each pair are operably engaged.

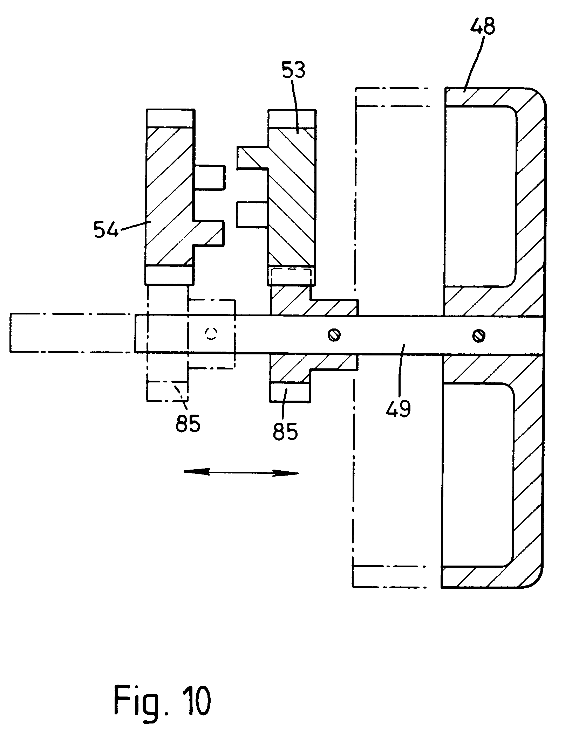

As shown in Figure 10 the rotatable shaft 49 alternatively may be provided with a drive gear 85 fixed thereto which engages either of the rotatable members 53, 54 with a detent. Thus a seat occupant will be able to feel when the drive gear 85 has engaged either the rotatable member 54 for adjustment of the height of the rear of the seat or the member 53 for adjustment of the height of the front of the seat.

The device of the third embodiment of the present invention allows very fine adjustment of the overall seat height and of the seat tilt.

## Claims

1. An adjustment device comprising a series of regularly spaced-apart notches formed in an arm, (6;30) and a rotatable member (10;22) comprising at least three projections (1,2,3;23,24,25) equally spaced-apart circumferentially of the member (10;22), two adjacent projections engaging in adjacent notches (4;28) arranged in a straight line, whereby rotation of the member (10;22) through an angle equal to the angular disposition of two adjacent projections causes the arm (6;30) to move through a distance as defined by the distance between two adjacent projections from one stable position to another, the direction of the reaction force along the arm (6;30) relative to the centre of rotation of the member (10;22) causing the projections (1,2,3; 23,24,25) to remain in the required notches until the member is rotated characterised in that the arm (6;30) extends at an angle of about 30° or of about 45° to the line of the notches (4;28).

2. An adjustment device according to Claim 1 characterised by comprising biasing means to create a force to keep the projections (1,2,3; 23,24,25) in their notches (4;28).

3. An adjustment device according to Claim 2 characterised in that the biasing means comprises a spring.

4. An adjustment device according to any one of the preceding claims characterised in that the arm (6;30) comprises a link or crank of a seat height adjustment mechanism.

5. An adjustment device according to any one of the preceding claims characterised in that the projections (1,2,3; 23,24,25) extend perpendicularly from one face of the rotatable member (10;22).

6. An adjustment device according to Claim 5 characterised in that the rotatable member (10;22) comprises a disc.

7. A seat height adjustment device characterised by comprising two arms, (41;43) one (41) linked to the front of the seat and the other (43) to the rear of the seat, each arm (41 or 43) having a series of regularly spaced apart notches (45, 46) formed therein, two rotatable members (53, 54) comprising at least three projections (73, 74, 75) equally spaced apart circumferentially of the member (53 or 54), selection means (48) for enabling two adjacent projections of one (53) of the two members (53 or 54) to be engageable with one arm (41 or 43) or two adjacent projections of the other (54) of the two members (53 or 54) to be engageable with the other (43 or 41) of the two arms (41, 43), the said adjacent projections engaging in adjacent notches (45 or 46) in the selected arm (41 or 43) whereby rotation of the member (53 or 54) through an angle equal to the angular disposition of the two adjacent projections causes the selected arm (41 or 43) to move through a distance as defined by the distance between the two adjacent projections from one stable position to another and raising or lowering the front or rear of the seat, depending on which of the two arms (41, 43) is selected, the direction of the reaction force along the selected arm (41 or 43) relative to the centre of rotation of the member (53 or 54) causing the projections (73, 74, 75) to remain in the required notches (45 or 46) until the member (53 or 54) is rotated.

8. A seat height adjustment device according to Claim 7 characterised by comprising biasing means such as a spring to create a force to keep the projections in their notches (45 or 46) of the selected arm (41 or 43).

9. A seat height adjustment device according to Claim 7 or Claim 8 characterised in that the rotatable members (53, 54) are attached to a rotatable handle (48) secured to the seat frame, the handle (48) being rotated to raise or lower the front or rear of the seat.

10. A seat height adjustment device according to Claim 9 characterised in that the handle (48) is used as the selection means.

11. A seat height adjustment device according to any one of Claims 7 to 10 characterised in that the members (53, 54) and handle (48) may be moved axially on a shaft (49) on which the members (53, 54) are mounted, the shaft (49) being formed with formations (51, 52) such as spines, which engage and thereby select one or other of the two members (53, 54).

12. A seat height adjustment device according to any one of the Claims 7 to 11 characterised in that the notches (45, 46) are arranged in a straight line in the arm (41, 43) wherein they are situated.

13. A seat height adjustment device according to any one of the Claim 12 characterised in that the direction of the reaction force along the selected arm (41 or 43) relative to the centre of rotation of the member (53, 54) is transverse to said straight line.

14. A seat height adjustment device according to any one of the Claim 13 characterised in that the direction of the arm (41, 43) is about 40° to said straight line.

15. A seat height adjustment device according to any one of the Claim 13 characterised in that the direction of the arm (41, 43) is about 30° to said straight line.

## Patentansprüche

1. Verstellvorrichtung mit einer in einem Arm (6;30) ausgebildeten Reihe von Kerben regelmäßigen Abstands und einem Drehelement (10;22) mit mindestens drei ebenso in regelmäßigem Abstand in seiner Umfangsrichtung angeordneten Vorsprüngen (1,2,3;23,24,25), wobei zwei benachbarte Vorsprünge, in benachbarte, auf einer Geraden angeordnete Kerben (4;28) eingreifen, wobei durch die Rotation des Elements (10;22) um einen Winkel gleich der Winkellage zweier benachbarter Vorsprünge der Arm (6;30) über eine durch den Abstand zweier benachbarter Vorsprünge von einer stabilen Position zu einer nächsten definierte Entfernung bewegt wird, durch die Richtung der Reaktionskraft entlang des Arms (6;30) relativ zum Rotationsmittelpunkt des Elements (10;22) die Vorsprünge (1,2,3; 23,24,25) in den erforderlichen Kerben bleiben, bis das Element gedreht wird, dadurch **gekennzeichnet,** daß der Arm (6;30) in einem Winkel von etwa 30° oder etwa 45° zur Reihe der Kerben (4;28) verläuft.

2. Verstellvorrichtung nach Anspruch 1, **gekennzeichnet** durch ein Vorspannungsmittel zum Erzeugen einer Kraft, um die Vorsprünge (1,2,3;23,24,25) in den Kerben (4;28) zu halten.

3. Verstellvorrichtung nach Anspruch 2, dadurch **gekennzeichnet,** daß das Vorspannungsmittel eine Feder ist.

4. Verstellvorrichtung nach einem der vorhergehenden Ansprüche, dadurch **gekennzeichnet,** daß der Arm (6;30) ein Glied oder eine Kurbel eines Höhenverstellmechanismus für Sitze ist.

5. Verstellvorrichtung nach einem der vorhergehenden Ansprüche, dadurch **gekennzeichnet,** daß die Vorsprünge (1,2,3;23,24,25) lotrecht zu einer Seite des Drehelements (10;22) stehen.

6. Verstellvorrichtung nach Anspruch 5, dadurch **gekennzeichnet,** daß das Drehelement (10;22) eine Scheibe ist.

7. Höhenverstellvorrichtung für Sitze, **gekennzeichnet** durch zwei Arme (41;43), von denen einer (41) mit dem Vorderteil des Sitzes und der andere (43) mit dem Hinterteil des Sitzes gekoppelt ist, wobei jeder Arm (41 oder 43) eine Reihe von darin ausgebildeten Kerben (45,46) regelmäßigen Abstands hat, zwei drehbare Elemente (53, 54) mit mindestens drei ebenso in regelmäßigem Abstand in dessen Umfangsrichtung angeordneten Vorsprüngen (73,74,75), Wahlmittel (48), um zwei benachbarte Vorsprünge des einen (53) der beiden Elemente (53 oder 54) mit einem Arm (41 oder 43) oder zwei benachbarte Vorsprünge des anderen (54) der beiden Elemente (53 oder 54) mit dem anderen (43 oder 41) der beiden Arme (41,43) in Eingriff zu bringen, wobei die benachbarten Vorsprünge mit den benachbarten Kerben (45 oder 46) im gewählten Arm (41 oder 43) in Eingriff kommen, wobei durch die Rotation des Elements (53 oder 54) um einen Winkel gleich der Winkellage zweier benachbarter Vorsprünge der gewählte Arm (41 oder 43) über eine durch den Abstand zweier benachbarter Vorsprünge von einer stabilen Lage zu einer nächsten definierte Entfernung bewegt und die Vorder- oder Rückseite des Sitzes angehoben oder abgesenkt wird, je nachdem, welcher der beiden Arme (41,43) gewählt wird, und durch die Richtung der Reaktionskraft entlang des gewählten Arms (41 oder 43) relativ zum Rotationsmittelpunkt des Elements (53 oder 54) die Vorsprünge (73,74,75) in den erforderlichen Kerben (45 oder 46) bleiben, bis das Element (53 oder 54) gedreht wird.

8. Höhenverstellvorrichtung für Sitze nach Anspruch 7, **gekennzeichnet** durch ein Vorspannungsmittel wie eine Feder zum Erzeugen einer Kraft, um die Vorsprünge in den Kerben (45 oder 46) des gewählten Arms (41 oder 43) zu halten.

9. Höhenverstellvorrichtung für Sitze nach Anspruch 7 oder 8, dadurch **gekennzeichnet,** daß die Drehelemente (53, 54) an einem am Sitzrahmen befestigten Drehgriff (48) angebracht sind, wobei der Griff (48) zum Heben und Senken des Vorder- oder Hinterteils des Sitzes gedreht wird.

10. Höhenverstellvorrichtung für Sitze nach Anspruch 9, dadurch **gekennzeichnet,** daß der Griff (48) als das Wahlmittel verwendet wird.

11. Höhenverstellvorrichtung für Sitze nach einem der Ansprüche 7 bis 10, dadurch **gekennzeichnet,** daß die Elemente (53,54) und der Griff (48) axial auf einem Schaft (49) bewegbar sind, auf dem die Elemente (53, 54) befestigt sind, wobei der Schaft (49) mit Formteilen (51,52) wie Naben versehen ist, welche einrasten und dadurch das eine oder andere der beiden Elemente (53,54) wählen.

12. Höhenverstellvorrichtung für Sitze nach einem der Ansprüche 7 bis 11, dadurch **gekennzeichnet,** daß die in dem jeweiligen Arm (41,43) befindlichen Kerben (45,46) auf einer Geraden angeordnet sind.

13. Höhenverstellvorrichtung für Sitze nach Anspruch 12, dadurch **gekennzeichnet,** daß die Richtung der Reaktionskraft entlang des gewählten Arms (41 oder 43) relativ zum Rotationsmittelpunkt des Elements (53,54) quer zu der Geraden ist.

14. Höhenverstellvorrichtung für Sitze nach Anspruch 13, dadurch **gekennzeichnet,** daß der Arm (41,43) unter etwa 40° zur Geraden ausgerichtet ist.

15. Höhenverstellvorrichtung für Sitze nach Anspruch 13, dadurch **gekennzeichnet,** daß der Arm (41,43) unter etwa 30° zur Geraden ausgerichtet ist.

## Revendications

1. Dispositif de réglage comprenant une série d'encoches régulièrement espacées les unes des autres formées dans un bras (6;30) et un élément rotatif (10;22) comportant au moins trois saillies (1,2,3;23,24,25) mutuellement équidistantes dans la direction circonférentielle de l'élément (10;22), deux saillies adjacentes s'engageant dans des encoches adjacentes (4;28) agencées en une ligne droite, de sorte que la rotation de l'élément (10;22) d'un angle égal à la disposition angulaire de deux saillies adjacentes provoque le déplacement du bras (6; 30) sur une distance définie par la distance entre deux saillies adjacentes d'une position stable à une autre, le sens de la force de réaction le long du bras (6;30) par rapport au centre de rotation de l'élément (10;22) obligeant les saillies (1,2,3;23,24,25) à rester dans les encoches requises jusqu'à ce qu'on fasse tourner l'élément, caractérisé en ce que le bras (6;30) s'étend suivant un angle de 30° environ ou de 45° environ par rapport à la ligne des encoches (4;28).

2. Dispositif de réglage suivant la revendication 1, caractérisé en ce qu'il comprend des moyens de sollicitation pour créer une force qui maintient les saillies (1,2,3;23,24,25) dans leurs encoches (4;28).

3. Dispositif de réglage suivant la revendication 2, caractérisé en ce que les moyens de sollicitation comprennent un ressort.

4. Dispositif de réglage suivant une quelconque des revendications précédentes, caractérisé en ce que le bras (6;30) comprend une biellette ou un levier coudé d'un mécanisme de réglage de hauteur de siège.

5. Dispositif de réglage suivant une quelconque des revendications précédentes, caractérisé en ce que les saillies (1,2,3;23,24,25) s'étendent perpendiculairement à partir d'une face de l'élément rotatif (10; 22).

6. Dispositif de réglage suivant la revendication 5, caractérisé en ce que l'élément rotatif (10;22) comprend un disque.

7. Dispositif de réglage de hauteur de siège, caractérisé en ce qu'il comprend deux bras (41;43) dont l'un (41) est relié à l'avant du siège et dont l'autre (43) est relié à l'arrière du siège, chaque bras (41 ou 43) comportant une série d'encoches régulièrement espacées les unes des autres (45,46), deux éléments rotatifs (53, 54) comportant au moins trois saillies (73,74,75) mutuellement équidistantes dans la direction circonférentielle de l'élément (53 ou 54), des moyens de sélection (48) pour permettre à deux saillies adjacentes d'un premier (53) des deux éléments (53 ou 54) de venir en prise avec un bras (41 ou 43) ou à deux saillies adjacentes de l'autre (54) des deux bras (53 ou 54) de venir en prise avec l'autre (43 ou 41) des deux bras (41,43), lesdites saillies adjacentes s'engageant dans des encoches adjacentes (45 ou 46) du bras choisi (41 ou 43) de sorte que la rotation de l'élément (53 ou 54) d'un angle égal à la disposition angulaire des deux saillies adjacentes entraîne un déplacement du bras choisi (41 ou 43) sur une distance définie par la distance entre les deux saillies adjacentes d'une position stable à une autre et la montée ou la descente de l'avant ou de l'arrière du siège, selon celui des deux bras (41,43) qui est choisi, le sens de la force de réaction le long du bras choisi (41 ou 43) par rapport au centre de rotation de l'élément (53 ou 54) obligeant les saillies (73,74,75) à rester dans les encoches requises (45 ou 46) jusqu'à ce qu'on fasse tourner l'élément (53 ou 54).

8. Dispositif de réglage de hauteur de siège suivant la revendication 7, caractérisé en ce qu'il comprend des moyens de sollicitation,tels qu'un ressort, pour créer une force de maintien des saillies dans leurs encoches (45 ou 46) du bras choisi (41 ou 43).

9. Dispositif de réglage de hauteur de siège suivant la revendication 7 ou la revendication 8, caractérisé en ce que les éléments rotatifs (53,54) sont attachés à une poignée tournante (48) fixée au cadre de siège, la poignée (48) étant tournée pour relever ou abaisser l'avant ou l'arrière du siège.

10. Dispositif de réglage de hauteur de siège suivant la revendication 9, caractérisé en ce que la poignée (48) sert de moyen de sélection.

11. Dispositif de réglage de hauteur de siège suivant une quelconque des revendications 7 à 10, caractérisé en ce que les éléments (53,54) et la poignée (48) peuvent être déplacés axialement sur un arbre (49) sur lequel les éléments (53,54) sont montés, l'arbre (49) comportant des configurations (51,52), telles que des cannelures, qui viennent en prise et donc sélectionnent l'un ou l'autre des deux éléments (53,54).

12. Dispositif de réglage de hauteur de siège suivant une quelconque des revendications 7 à 11, caractérisé en ce que les encoches (45,46) sont agencées en une ligne droite dans le bras (41,43) dans lequel elles sont situées.

13. Dispositif de réglage de hauteur de siège suivant la revendication 12, caractérisé en ce que le sens de la force de réaction le long du bras choisi (41 ou 43) par rapport au centre de rotation de l'élément (53, 54) est transversal à ladite ligne droite.

14. Dispositif de réglage de hauteur de siège suivant la revendication 13, caractérisé en ce que la direction du bras (41,43) est inclinée de 40° environ par rapport à ladite ligne droite.

15. Dispositif de réglage de hauteur de siège suivant la revendication 13, caractérisé en ce que la direction du bras (41,43) est inclinée de 30° environ par rapport à ladite ligne droite.
